# EUROPEAN PATENT APPLICATION

(11) **EP 2 783 984 A1**
(43) Date of publication of application: **01.10.2014**
(21) Application number: 13161805.0
(22) Date of filing: 28.03.2013
(51) Int. Cl.: B64D 11/06

(54) **Seating array for an aircraft cabin**

(71) Applicant: Etihad Airways, Abu Dhabi (AE)
(72) Inventor: Dryburgh, Ian, Sparsholt, Hampshire SO21 2NS (GB); Nicholas, Richard, London E6 3NH (GB)
(74) Representative: Sharman, Thomas Alexander

(57) **Abstract**

A seating array for an aircraft cabin comprises a plurality of passenger modules, wherein each module: is defined by first and second end walls extending substantially transversely to a longitudinal centreline of the aircraft cabin, the end walls connected by at least one sidewall which defines an entrance to the module; includes a seat assembly and an ottoman, the ottoman being spaced in a longitudinal direction of the array from the seat assembly; has at least one door assembly moveable from a stowed position in which the entrance is unobstructed by the door assembly to a deployed position in which the entrance is at least partially obstructed by the door assembly; and is wider adjacent the seat assembly than adjacent the ottoman. The plurality of passenger modules is divided into at least two columns of modules, each column including at least two modules, the at least two columns being separated by an aisle. At least one pair of substantially transversely adjacent modules comprising one module on opposite first and second sides of the aisle, the seat assembly of a first module on a first side of the aisle overlaps in a longitudinal direction with the ottoman of the second module on a second side of the aisle and the seat assembly of the second module on the second side of the aisle overlaps in a longitudinal direction with the ottoman of the first of module on the first side of the aisle.

## Description

This invention relates to a seating array for an aircraft cabin. The invention is particularly suitable for a Business or First Class aircraft cabin.

Seating arrays for an aircraft cabin which comprise a plurality of individual or "private" passenger compartments are generally known. It is known, for example that each compartment may be formed by a series of walls and accessible via a doorway in one of the walls provided with a door assembly for opening and closing the doorway. It is also known that each compartment may include a seat for a passenger and an ottoman.

There is a general need, particularly in relation to Business and First Class cabins, for a novel seating arrangement to attract custom, to maximise the number of seats meeting certain design requirements which can be installed within the space available space in an aircraft cabin and to increase the space available in each suite for a passenger.

The invention seeks to provide a novel seating array in which individual passenger modules including seats are arranged in such a way as to maximise the number of passenger modules which can occupy the available space in an aircraft cabin and to increase the space available in each suite for a passenger.

In the following description, the terms "longitudinal" and "longitudinally" are used to mean extending along the length direction of an aircraft cabin on or parallel to a longitudinal centreline of an aircraft cabin and the terms "transverse" and "transversely" are used to mean extending across an aircraft cabin from one side of the aircraft cabin to the other in a direction which is perpendicular to a longitudinal centreline of the aircraft cabin.

The invention provides a seating array for an aircraft cabin comprising:
a plurality of passenger modules, wherein each module:
   i. is defined by first and second end walls extending substantially transversely to a longitudinal centreline of the aircraft cabin, the end walls connected by at least one sidewall which defines an entrance to the module;
   ii. includes a seat assembly and an ottoman, the ottoman being spaced in a longitudinal direction of the array from the seat assembly;
   iii, has at least one door assembly moveable from a stowed position in which the entrance is unobstructed by the door assembly to a deployed position in which the entrance is at least partially obstructed by the door assembly; and
   iv. is wider adjacent the seat assembly than adjacent the ottoman;
      wherein the plurality of passenger modules is divided into at least two columns of modules, each column including at least two modules, the at least two columns being separated by an aisle; and
      wherein in at least one pair of substantially transversely adjacent modules comprising one module on opposite first and second sides of the aisle, the seat assembly of a first module on a first side of the aisle overlaps in a longitudinal direction with the ottoman of the second module on a second side of the aisle and the seat assembly of the second module on the second side of the aisle overlaps in a longitudinal direction with the ottoman of the first of module on the first side of the aisle.

The invention provides a novel seating array in which individual passenger modules including seats are arranged in such a way as to maximise the number of passenger modules which can occupy the available space in an aircraft cabin. The particular combination of features of the invention also provides additional space for passengers than in known suites, particularly at the seat end of the modules. It also permits a reduced overall cabin length compared to known seating arrays and enables the seating array to have straight ends.

Some preferred features of the present invention are provided in the dependent claims to which reference should be made.

Preferably, each module is generally tapered along at least one side from the seat assembly towards the ottoman. This increases the available space for each passenger, particular at the seat end of the modules.

Preferably, the plurality of passenger modules is arranged so that the entrance of the at least one pair of substantially transversely adjacent modules at least partially overlap in the longitudinal direction of the array. This reduces the longitudinal dimension of a pair of longitudinally adjacent modules and enables the ends of the columns of modules to be level with one another forming straight ends to the seating array.

Preferably, the plurality of passenger modules is arranged so that the respective seat assemblies of the at least one pair of substantially transversely adjacent modules face in opposite directions.

Preferably, the plurality of passenger modules is arranged so that the respective seat assemblies of at least one pair of longitudinally adjacent modules along the length of each column face in opposite directions.

Preferably, the plurality of passenger modules is arranged so that the entrances of each pair of substantially transversely adjacent modules comprising one module from opposite first and second sides of the aisle at least partially overlap in the longitudinal direction of the array. This reduces the longitudinal dimension of a pair of longitudinally adjacent modules and enables the ends of the columns of modules to be level with one another forming straight ends to the seating array.

Preferably, the plurality of passenger modules is arranged so that the respective seat assemblies of each longitudinally adjacent pair of adjacent modules along the length of each column face in opposite directions.

Preferably, the plurality of passenger modules is arranged so that the respective seat assemblies of each pair of substantially transversely adjacent modules on opposite sides of the aisle face in opposite directions.

Preferably, the plurality of passenger modules is arranged so that, along each column, in each pair of substantially transversely adjacent modules comprising one module each from opposite first and second sides of the aisle, the seat assembly of a first module on a first side of the aisle overlaps in a longitudinal direction with the ottoman of the second modules on a second side of the aisle and the seat assembly of the second module on the second side of the aisle overlaps in a longitudinal direction with the ottoman of the first of module on the first side of the aisle. This reduces the longitudinal dimension of a pair of longitudinally adjacent modules and enables the ends of the columns of modules to be level with one another forming straight ends to the seating array.

Preferably, the plurality of passenger modules is arranged so that the aisle appears generally curved along the entire length of the seating array. This provides a novel aisle arrangement in which the aisle is curved and has a common width along the length of the aisle. The aisle may be continuously curved from one end of the array to the other or curved at long at least a part of the length of the cabin.

The plurality of passenger modules may be arranged so that the aisle is defined by the at least one side wall of each module and the sidewalls are formed from a series of straight sidewall portions angled to the longitudinal centreline of the aircraft cabin so as to give the appearance of a curved aisle. Alternatively, the plurality of passenger modules is arranged so that the aisle is defined by the at least one side wall of each module and the sidewalls are formed from a series of straight sidewall portions connected by curved sidewall portions so as to give the appearance of a curved aisle.

Preferably, the seating array includes two substantially transversely adjacent columns of modules, one column on each side of the cabin longitudinal centreline, the transversely adjacent modules being separated by a central dividing sidewall, wherein the central dividing sidewall includes a movable screen portion moveable between an extended position in which the screen divides the modules and a retracted position in which the modules are at least partially open along the central dividing wall. More preferably, the moveable screen portion is slidable between the extended position and the retracted position. More preferably, the moveable screen portion is slidable relative to and within a fixed portion of the sidewall. These features provide means for passengers travelling together and sitting in adjacent suites to form a double module along at least part of the length of the modules to enable them to interact during flight.

Preferably, the seating array includes four columns of modules, each column including at least two longitudinally adjacent modules, wherein two of the columns of modules are positioned centrally within an aircraft cabin on opposite sides of the aircraft cabin longitudinal centreline so that the modules in each column are transversely adjacent one another, and the other two columns are positioned along the sides of the aircraft cabin adjacent the aircraft side walls, wherein an aisle is provided on each side of the cabin longitudinal centreline between the central column of seats and the column of seats adjacent the aircraft sidewalls, the aisles being defined by the at least one sidewall of each of the modules in such a way that the aisle appears substantially continuously curved along a length of the array. Alternatively, the aisles may be substantially continuously angled along the length of the seating array having the appearance of a 'zig-zag' or joggled

Preferably, the plurality of passenger modules is arranged so that the respective seat assemblies of the central two columns of seats are all substantially adjacent one another and the respective seat assemblies of the two columns of seats along the sides of the cabin are spaced from one another and positioned substantially adjacent the corners of the seating array. The separation between the seats of adjacent suites in the seating array which face each other in opposite directions is therefore increased providing additional privacy for passengers.

Preferred embodiments of the present invention will now be described with reference to the accompanying drawings, in which:
Figure 1 is a plan view of a seating array according to the present invention positioned within an aircraft cabin;
Figure 2 is a perspective view of the seating array of Figure 1;
Figure 3 is a further perspective view of the seating array of Figure 1;
Figure 4 is a further view of the seating array of Figure 1 from an elevated position at a front or rear end of the cabin;
Figure 5 is a side view of a column of passenger modules of the seating array with the door assemblies in a stowed position;
Figure 6 is a further side view of the column of passenger modules of the seating array of Figure 5 with the door assemblies in a deployed position;
Figure 7 is a plan view of a single passenger module forming part of the seating array of Figure 1;
Figure 8 is a perspective view of the individual passenger module of Figure 7;
Figure 9 is a further view of the passenger module of Figure 7 from an elevated position at the front or rear of the module;
Figure 10 is a further view of the individual passenger module of Figure 7;
Figure 11 is a further view of the individual passenger module of Figure 7;
Figure 12 is an overhead view of a double passenger module forming part of the central columns of modules of the seating array of Figure 1 with the seats in an upright position;
Figure 13 shows a further view of the double passenger module of Figure 12 with the seats in a reclined or lie-flat position;
Figure 14 is a perspective view of a double passenger module from an elevated position at the front or rear of the module;
Figure 15 is a further view of a double passenger module from an elevated position at the front or rear of the module;
Figure 16 is a perspective view of a double passenger module forming part of the seating array of Figure 1;
Figure 17 is a further perspective view of a double passenger module;
Figure 18 is a further view of a double passenger module with the seats in a reclined or lie flat position and a sliding screen portion of the central module side wall in a retracted position to form a double passenger module;
Figure 19 is a side view of a double passenger module with the sliding screen portion in an extended position; and
Figure 20 is a further side view of a double passenger module with the seat in a reclined position and the screen in a retracted position.

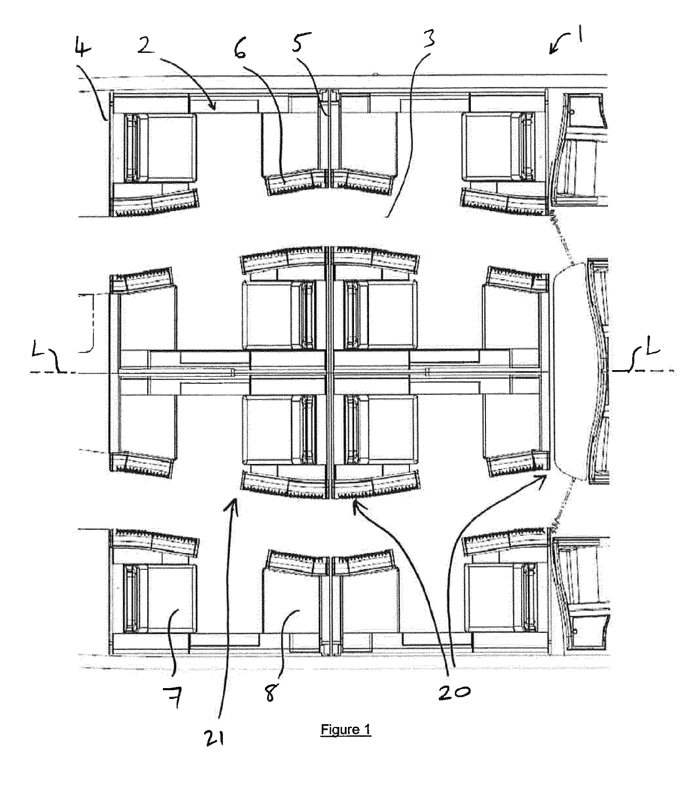

Figure 1 shows the general arrangement of seating in a seating array 1 having a longitudinal centreline L. The seating array comprises a plurality of individual passenger modules 2 or suites arranged in four columns of modules extending along the length of the cabin, each column consisting of a pair of longitudinally adjacent passenger modules positioned end to end. Two of the columns of passenger modules are positioned in the centre of the cabin, transversely adjacent one another on opposite sides of the longitudinal centre line of the cabin. The other two columns are positioned adjacent at the sides of the aircraft cabin adjacent the side walls of the aircraft. On each side of the cabin centreline, a space defined between the central column of seats and the column of seats at the side of the cabin provides a generally longitudinally extending access aisle 3 permitting access to each of the suites.

Each of the passenger modules is defined by first 4 and second 5 end walls extending in a transverse direction from the aircraft sidewall towards the longitudinal centre line of the aircraft cabin. The first and second end walls are connected by at least one generally longitudinally extending side wall 6. In the central columns of passenger suites, an inner or central side wall of each module may be a shared side wall positioned along the longitudinal centre line of the cabin and dividing two transversely adjacent modules. In the columns of modules at the sides of the cabin, the aircraft side wall may form an outer side wall of each of the passenger modules. In a preferred embodiment, the end walls and sidewall(s) forming the passenger modules are about 1470mm high.

Each of the passenger modules includes a seat 7 for a passenger and an ottoman 8. The ottoman is spaced in the longitudinal direction from and faces the passenger seat so as to provide a foot rest for a passenger sitting in the seat. The ottoman may also provide additional in-flight seating for another passenger. The ottoman is electrically actuated and slidable forwardly and rearwardly (towards and away from the seat) on linear slides. A user interface is provided to enable the passenger to control sliding movement of the ottoman. The means for and mechanism for adjusting the ottoman does not form part of the present invention and will not, therefore, be described in detail.

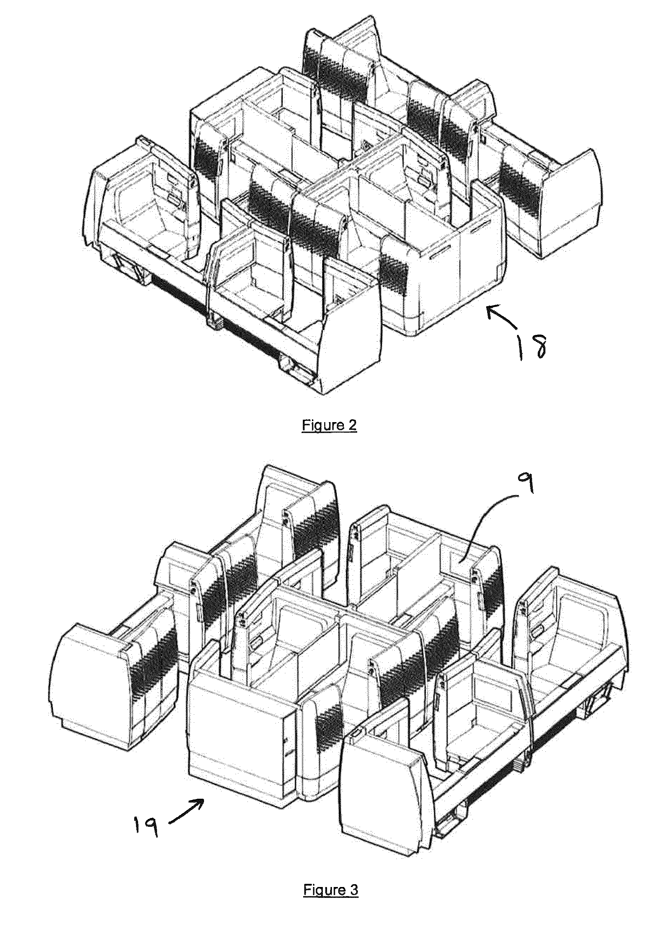

With reference to Figure 3, a flat panel monitor 9 is provided above the ottoman and faces the seat to provide passenger entertainment. Each module further includes a folding table assembly (not shown) moveable between a folded and stowed position in which it may be hidden from sight to an unfolded deployed position for use by a passenger sitting in the seat. The mechanism for deploying the table does not form part of the present invention and will not, therefore, be described in detail.

As shown in the various Figures, each of the modules 2 is wider at the end adjacent the seat than at the end adjacent the ottoman. Each module is generally tapered from the seat end towards the ottoman end along at least one side, the side wall bordering and defining the aisle converging towards the other side wall.

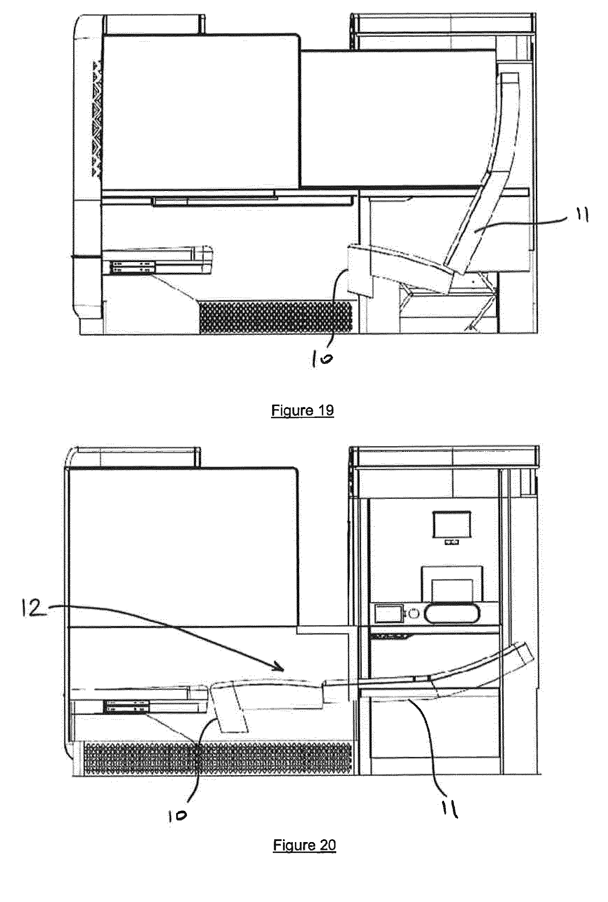

With reference to Figures 19 and 20, the seat of each passenger module is convertible from an upright or Taxi Take Off and Landing (TTOL) position to a substantially horizontal or lie-flat sleeping position. An electrically operable seat adjustment mechanism enables the seat cushion to slide towards the ottoman and the seat back to be lowered to a position in which it is substantially level with the seat cushion and ottoman to form the sleeping surface. In the sleeping position, the edge 10 of the seat cushion furthest from the seat back 11 abuts the edge of the ottoman closest to the seat cushion so that the seat back and seat cushion form a support surface 12 for a passenger's head and back and the seat cushion and ottoman form a support surface for a passenger's legs and feet. A user interface is provided to enable the passenger to control the position of the seat. The particular mechanism for converting the seat from the upright position to the lie flat position does not form part of the present invention and will not, therefore, be described in detail.

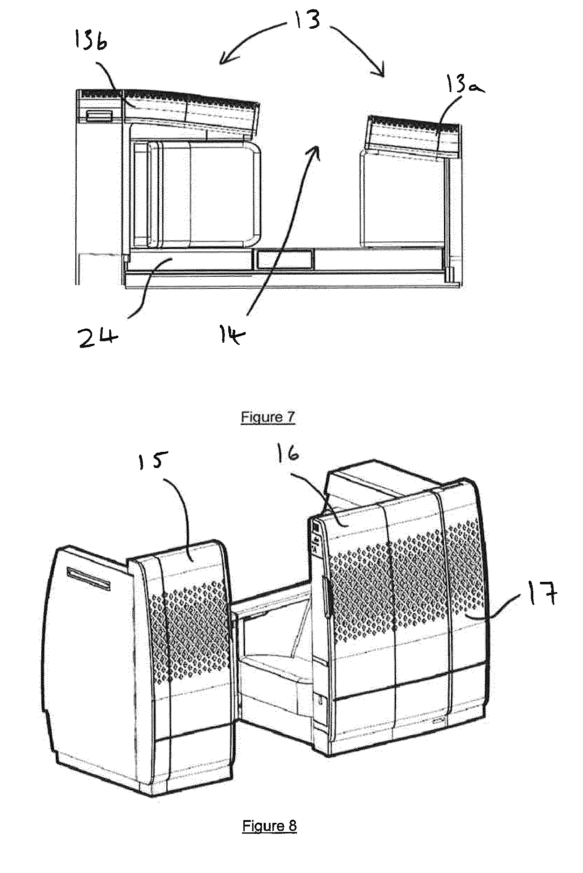

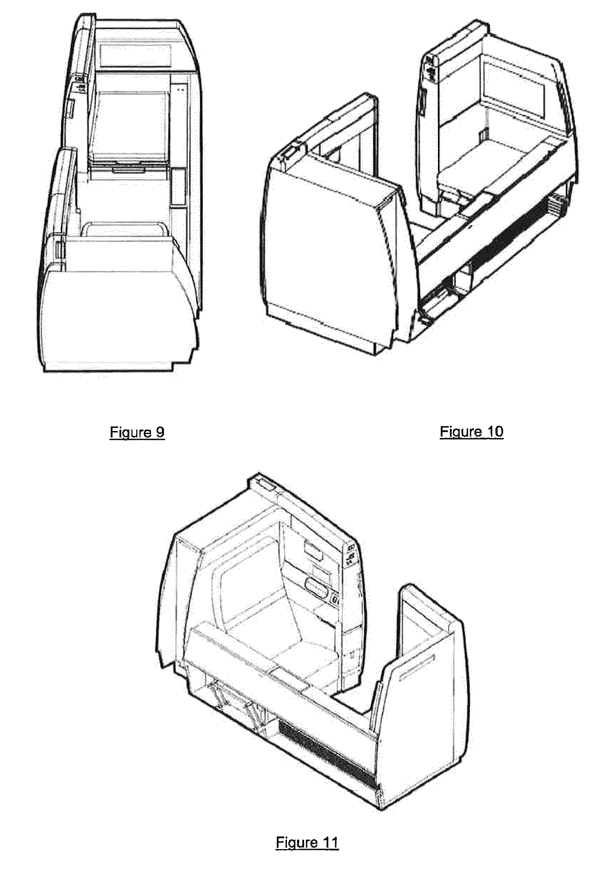

With reference to Figures 7 to 13, the side walls of each of the passenger modules which border and define the aisle are formed by one or more furniture units 13. A first portion 13a of the sidewall adjacent the aisle side of the ottoman defines a wardrobe space accessible via a hinged door. A second portion 13b of the sidewall adjacent the aisle side of the seat includes a storage unit for storing items to be accessible by a passenger, for example magazines and in-flight entertainment materials.

An aperture 14 in each side wall between the first and second sidewall portions defines a doorway to permit access to the module. Each module is provided with a pair of door assemblies 15, 16. Each of the door assemblies is preferably provided with a pattern of holes or fretwork 17 which improves the aesthetic appeal of the passenger modules whilst enabling a member of flight crew to view a passenger within each passenger module when the door assemblies are closed.

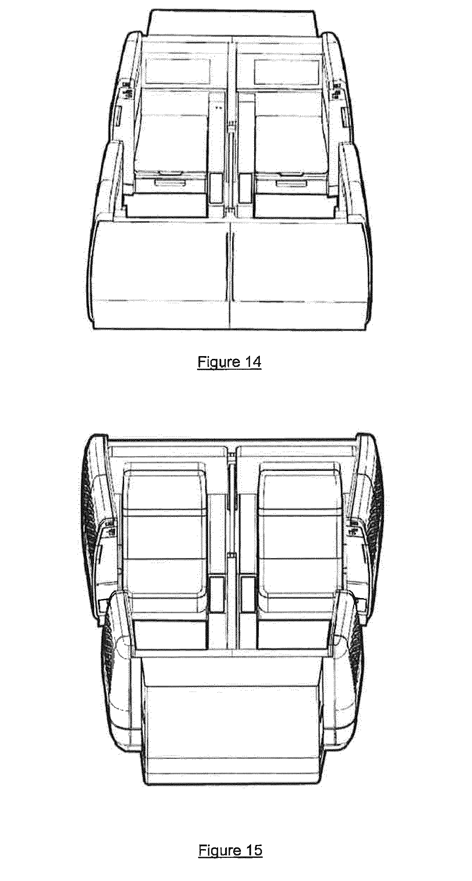

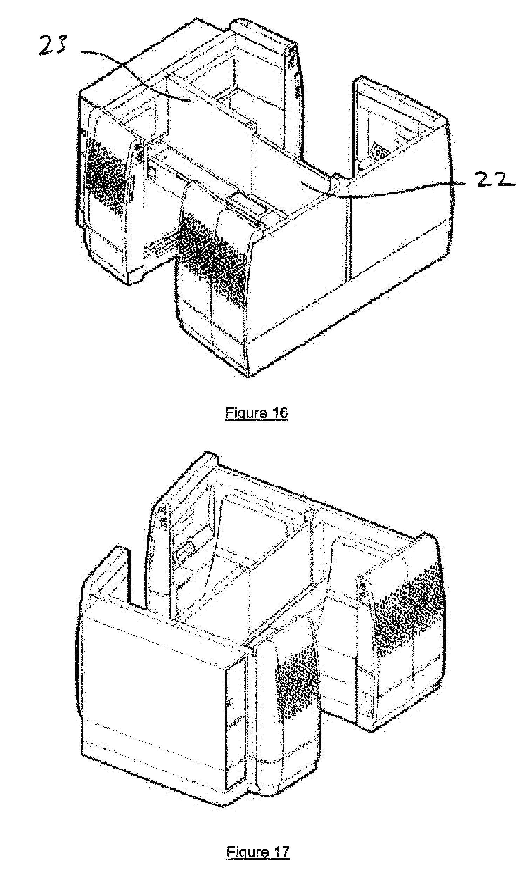

The door assemblies are slidably supported by the furniture units defining the first and second sidewall portions. The door assemblies are slideable relative to the furniture units from a stowed position (Figure 15) in which the doorway is substantially unobstructed by the door assemblies to a deployed position (Figure 16) in which the doorway is at least partially obstructed by each door assembly, the door assemblies abutting one another in the centre of the doorway so as to obstruct the doorway and provide increased privacy for a passenger occupying the passenger module. The door assemblies include a latch (not shown) to enable the doors to be latched in the stowed position during taxi, take off and landing.

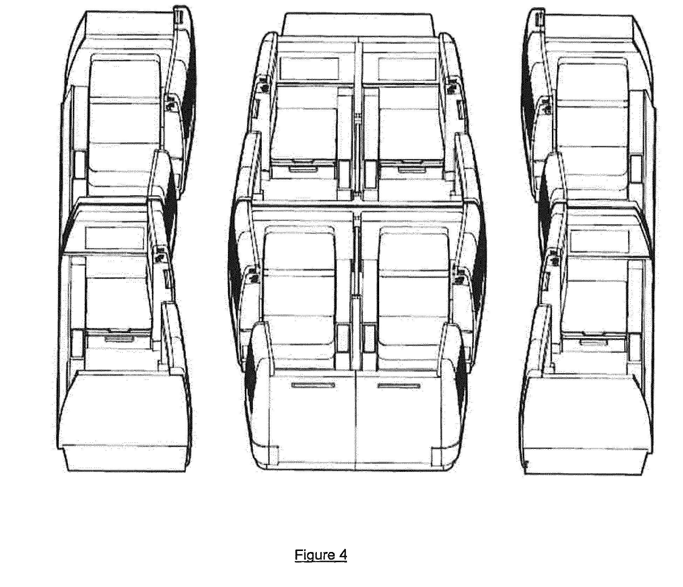

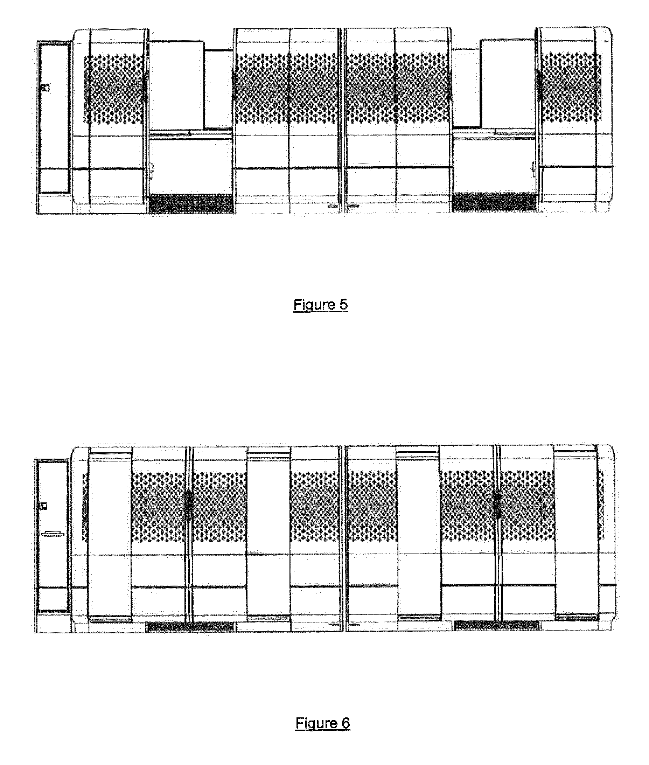

As shown in Figures 1 to 5, the passenger modules are arranged within the seating array so that the respective seats of longitudinally adjacent modules in each column face in opposite forward/rearward directions. The modules 2 are also arranged so that the respective seats of each transversely adjacent pair of passenger modules on opposite sides of an aisle face in opposite forward/rearward directions and are offset from one another in the longitudinal direction.

The modules are further arranged within the seating array 1 so that the seat assembly 7 of a module on a first side of an aisle 3 is substantially transversely adjacent to the ottoman 8 of an adjacent module on an opposite, second, side of the aisle. Similarly, the ottoman of a module on the first side of the aisle is substantially transversely adjacent to the seat assembly of an adjacent module on the second side of the aisle. This provides an arrangement in which the widest part of the passenger module on the first side of the aisle is adjacent to the narrowest part of the module on the second side of the aisle.

The modules are further arranged within the seating array so that the doorways of each pair of transversely adjacent modules on opposite sides of each aisle at least partially overlap in the longitudinal direction of the cabin. In a preferred embodiment, each doorway is about 660mm and the doorways overlap by about 275mm.

The overall arrangement of the modules within the seating array is such that the respective seat backs of the seats of the four modules forming the central columns of modules adjacent the cabin longitudinal centre line are substantially adjacent one another in the centre of the seating array and the seat backs of the respective seats of the passenger modules forming the columns positioned along the sides of the aircraft cabin are spaced from one another and substantially adjacent the corners of the aircraft cabin. The arrangement of the passenger modules within the seating array is such that the forward and rearward ends 18,19 of the seating array are substantially straight, the ends of each of the columns being substantially level with the ends of the other columns.

The arrangement of modules is such that each of the aisles 3 defined by the furniture units forming the suites and which divides the central columns of seats from the columns of seats positioned at the sides of the cabins appears substantially continuously curved along the entire length of the cabin from the first cabin end 18 to the second cabin end 19. The furniture units forming the side walls of the suites which line the aisle and/or the door assemblies may be curved so as to continue the curvature of the aisle. Alternatively, the aisle may be formed from a series of straight portions angled to the longitudinal centreline of the cabin, the straight portions are connected to give the appearance of a curved aisle. For example, in a region 20 substantially adjacent each of the end walls of the modules, the furniture units defining the side wall may be generally curved and in a region 21 extending from the seat cushion of the seat to the ottoman of each modules, the furniture may be straight and angled to the cabin centreline.

The modules may be arranged so that about 65% of each aisles is formed of straight sections and about 35% of each aisle is formed of curved sections, the straight sections being angled at 5 to 15 degrees to the cabin centreline in inboard and outboard directions. When the aisles are made up of straight sections and curved sections, the aisles still have the appearance of being substantially curved along their length. Alternatively, the modules may be arranged so that all the aisles are defined of a series of straight portions angled to one another so as to provide an aisle having a 'zigzag' or 'joggled' appearance.

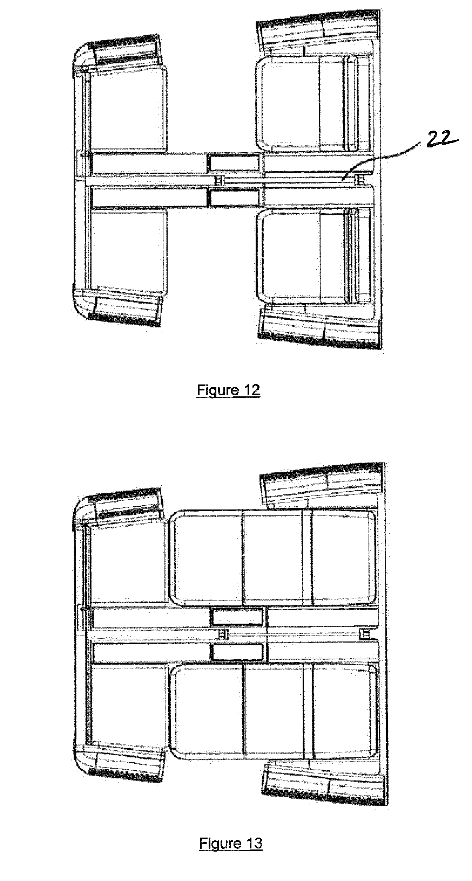

With reference to Figures 12 to 20, each pair of transversely adjacent passenger modules forming the central columns of modules is provided with a moveable screen portion 22along the side wall positioned on the longitudinal centre line of the cabin which divides the passenger module from the transversely adjacent passenger module.

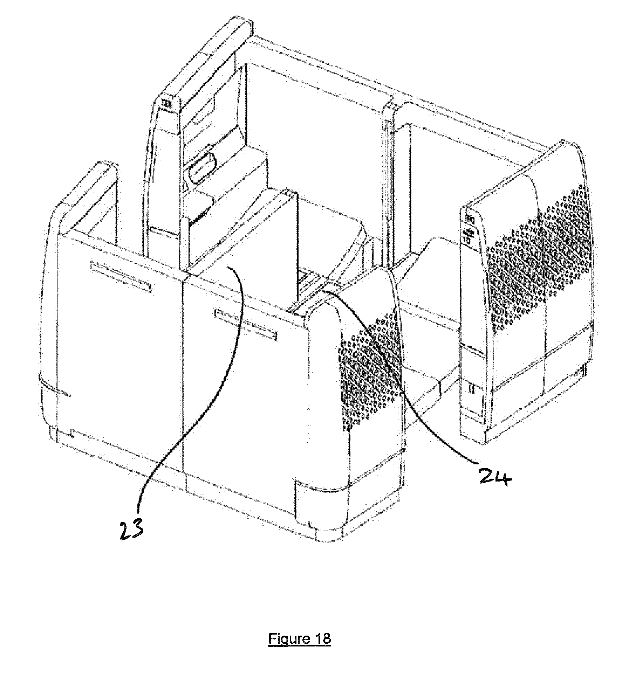

The moveable screen portion is moveable between an extended position (Figures 12,16,17) in which the dividing sidewall is closed along the length of the adjacent passenger modules and a retracted position (Figures 13,18) in which the dividing sidewall is at open along a part of the length of the adjacent passenger modules to enable the passengers in the adjacent modules to interact. The moveable screen portion is manually operated and may include a latch for holding the screen in the extended and/or retracted position.

The moveable screen is slideable forwardly and rearwardly along the longitudinal centre line of the cabin between the extended and retracted positions. The screen is provided with rollers or wheels slidable along a rail or within a track (not shown). The screen is slideable within a fixed portion 23 of the side wall positioned between and dividing the ottoman of the adjacent passenger modules.

When the seats of the adjacent modules are converted to form a sleeping surface, the sliding screen portion enables the sleeping surface of transversely adjacent modules to be combined to form a double sleeping surface at least along a portion of the length of the modules proximate the head/torso end of the sleeping surface. The four individual passenger modules of the two central columns of seats are convertible to form two pairs of modules offering a partial length double sleeping surface.

Each of the seats may be provided with one or more armrests 24. The seats in the central columns of modules are preferably provided with lowerable or rotating armrests which can be lowered/rotated when so that they are substantially level with the seats so as to provide a wider flat sleeping surface for the upper torso. This may either be done when the seats are occupied by passengers travelling alone or when the seats of the adjacent modules are converted to form a combined sleeping surface for passengers travelling together

All numeric values in the preceding description are provided by way of example only and are not intended to limit the scope of the claims. The skilled person will readily appreciate that alternative numeric values may be appropriate.

## Claims

1. A seating array for an aircraft cabin comprising:
a plurality of passenger modules, wherein each module:
(i) is defined by first and second end walls extending substantially transversely to a longitudinal centreline of the aircraft cabin, the end walls connected by at least one sidewall which defines an entrance to the module;
(ii) includes a seat assembly and an ottoman, the ottoman being spaced in a longitudinal direction of the array from the seat assembly;
(iii) has at least one door assembly moveable from a stowed position in which the entrance is unobstructed by the door assembly to a deployed position in which the entrance is at least partially obstructed by the door assembly; and
(iv) is wider adjacent the seat assembly than adjacent the ottoman;
wherein the plurality of passenger modules is divided into at least two columns of modules, each column including at least two modules, the at least two columns being separated by an aisle; and
wherein in at least one pair of substantially transversely adjacent modules comprising one module on opposite first and second sides of the aisle, the seat assembly of a first module on a first side of the aisle overlaps in a longitudinal direction with the ottoman of the second module on a second side of the aisle and the seat assembly of the second module on the second side of the aisle overlaps in a longitudinal direction with the ottoman of the first of module on the first side of the aisle.

2. A seating array according to claim 1 wherein each module is generally tapered along at least one side from the seat assembly towards the ottoman.

3. A seating array according to claim 1 or 2 wherein the plurality of passenger modules is arranged so that the entrance of the at least one pair of substantially transversely adjacent modules at least partially overlap in the longitudinal direction of the array.

4. A seating array according to any of claims 1 to 3, wherein the plurality of passenger modules is arranged so that the respective seat assemblies of the at least one pair of substantially transversely adjacent modules face in opposite directions.

5. A seating array according to any preceding claim, wherein the plurality of passenger modules is arranged so that the respective seat assemblies of at least one pair of longitudinally adjacent modules along the length of each column face in opposite directions.

6. A seating array according to any preceding claim, wherein the plurality of passenger modules is arranged so that the entrances of each pair of substantially transversely adjacent modules comprising one module from opposite first and second sides of the aisle at least partially overlap in the longitudinal direction of the array.

7. A seating array according to any preceding claim, wherein the plurality of passenger modules is arranged so that the respective seat assemblies of each longitudinally adjacent pair of adjacent modules along the length of each column face in opposite directions

8. A seating array according to any preceding claim, wherein the plurality of passenger modules is arranged so that the respective seat assemblies of each pair of substantially transversely adjacent modules on opposite sides of the aisle face in opposite directions.

9. A seating array according to any preceding claim, wherein the plurality of passenger modules is arranged so that, along each column, in each pair of substantially transversely adjacent modules comprising one module each from opposite first and second sides of the aisle, the seat assembly of a first module on a first side of the aisle overlaps in a longitudinal direction with the ottoman of the second modules on a second side of the aisle and the seat assembly of the second module on the second side of the aisle overlaps in a longitudinal direction with the ottoman of the first of module on the first side of the aisle

10. A seating array according to any preceding claim, wherein the plurality of passenger modules is arranged so that the aisle appears generally curved along the entire length of the seating array.

11. A seating array according to any of claims 1 to 9, wherein the plurality of passenger modules is arranged so that the aisle is defined by the at least one side wall of each module and the sidewalls are formed from a series of straight sidewall portions angled to the longitudinal centreline of the aircraft cabin so as to give the appearance of a curved aisle.

12. A seating array according to any of claims 1 to 9, wherein the plurality of passenger modules is arranged so that the aisle is defined by the at least one side wall of each module and the sidewalls are formed from a series of straight sidewall portions connected by curved sidewall portions so as to give the appearance of a curved aisle.

13. A seating array according to any of the preceding claims, including two substantially transversely adjacent columns of modules, one column on each side of the cabin longitudinal centreline, the transversely adjacent modules being separated by a central dividing sidewall, wherein the central dividing sidewall includes a movable screen portion moveable between an extended position in which the screen divides the modules and a retracted position in which the modules are at least partially open along the central dividing wall.

14. A seating array according to any of the preceding claims including four columns of modules, each column including at least two longitudinally adjacent modules, wherein two of the columns of modules are positioned centrally within an aircraft cabin on opposite sides of the aircraft cabin longitudinal centreline so that the modules in each column are transversely adjacent one another, and the other two columns are positioned along the sides of the aircraft cabin adjacent the aircraft side walls, wherein an aisle is provided on each side of the cabin longitudinal centreline between the central column of seats and the column of seats adjacent the aircraft sidewalls, the aisles being defined by the at least one sidewall of each of the modules in such a way that the aisle appears substantially continuously curved along a length of the array.

15. A seating array according to claim 14 wherein the plurality of passenger modules is arranged so that the respective seat assemblies of the central two columns of seats are all substantially adjacent one another and the respective seat assemblies of the two columns of seats along the sides of the cabin are spaced from one another and positioned substantially adjacent the corners of the seating array.
